# EUROPÄISCHE PATENTSCHRIFT

(11) **EP 4 487 049 B1**
(45) Veröffentlichungstag und Bekanntmachung des Hinweises auf die Patenterteilung: **19.11.2025**
(21) Anmeldenummer: 23704983.8
(22) Anmeldetag: 13.02.2023
(51) Int. Cl.: F16P 3/14

(54) **VERFAHREN UND SYSTEM ZUR FREIGABE EINER SICHERHEITSKRITISCHEN FUNKTION EINER MASCHINE**
METHOD AND SYSTEM FOR ENABLING A SAFETY-CRITICAL FUNCTION OF A MACHINE
PROCÉDÉ ET SYSTÈME POUR ACTIVER UNE FONCTION CRITIQUE DE SÉCURITÉ D'UNE MACHINE

(30) Priorität: 03.03.2022 DE 102022105018
(43) Veröffentlichungstag der Anmeldung: 08.01.2025
(73) Patentinhaber: TRUMPF Werkzeugmaschinen SE + Co. KG, 71254 Ditzingen (DE)
(72) Erfinder: LARSEN-VEFRING, Thorsten, 70499 Stuttgart (DE); BAUER, Klaus, 71254 Ditzingen (DE); BOCK, Hans-Peter, 74321 Bietigheim-Bissingen (DE)
(74) Vertreter: Trumpf Patentabteilung
(86) Internationale Anmeldenummer: PCT/EP2023/053498
(87) Internationale Veröffentlichungsnummer: WO 2023/165802

(56) Entgegenhaltungen:
- DE-A1- 102005 063 217
- DE-A1- 102016 226 133
- DE-B3- 102018 115 233

## Beschreibung

Die Erfindung betrifft ein Verfahren zur Freigabe einer sicherheitskritischen Funktion einer Maschine.

Weiter betrifft die Erfindung ein System zu Freigabe einer sicherheitskritischen Funktion einer Maschine.

Es ist bekannt, räumliche Bereiche mittels Sensoren zu überwachen und Maschinen anzuhalten, wenn die Sensoren ein Risiko im Bereich detektieren. Ein Risiko kann bspw. eine Person oder ein Gegenstand sein, der in diesem Bereich nicht erwartet wird.

Typischerweise wird die Maschine gestoppt oder anderweitig in einen sicheren Zustand gebracht sobald einer der Sensoren ein Risiko detektiert. Eine ggf. vorhandene Recheneinheit zur Bewertung der Sensorsignale wird hier mit zum Sensor gezählt. Eine Freigabe der gestoppten Maschine ist typischerweise nur bei Sichtprüfung des überwachten Bereichs möglich. Es ist folglich notwendig, dass eine Person zur Freigabe in direkter Nähe des überwachten Bereichs ist.

Aus der DE 10 2016 226 133 A1 ist eine Steuereinrichtung bekannt, die von einem Sender mit einem Lichtsignal von einem Alarmzustand in einen Normalzustand versetzt werden kann.

Aus der DE 10 2018 115 233 B3 ist ein Verfahren zur sicheren Übertragung von Bilddaten bekannt.

Aus der DE 10 2005 063 217 A1 ist ein Verfahren zum Konfigurieren einer Überwachungseinrichtung bekannt.

Der Erfindung liegt die Aufgabe zugrunde, ein eingangs genanntes System und ein eingangs genanntes Verfahren bereitzustellen, welches die Freigabe der Maschine vereinfacht.

Diese Aufgabe wird gelöst durch ein Verfahren nach Anspruch 1 und ein System nach Anspruch 8.

Erfindungsgemäß wird ein Verfahren zur Freigabe einer sicherheitskritischen Funktion einer Maschine bereitgestellt, wobei ein Überwachungssystem einen sicherheitskritischen Bereich der Maschine überwacht, wobei das Überwachungssystem zumindest einen Überwachungssensor umfasst, wobei die sicherheitskritische Funktion gesperrt wird, wenn das Überwachungssystem in einem Signal des Überwachungssensors ein erstes Risiko detektiert, wobei das erste Signal des Überwachungssensors zu einem ersten Zeitpunkt mit einem ersten Identifikator zu einer ersten Nachricht kombiniert wird, wobei die erste Nachricht von dem Überwachungssystem an eine Freigabeeinheit versendet wird, wobei die Freigabeeinheit prüft, ob das Risiko in dem ersten Signal erkennbar ist, oder ob das Risiko nicht oder nicht mehr vorhanden ist, wobei die Freigabeeinheit eine zweite Nachricht mit einem Freigabesignal und dem ersten Identifikator verschickt, wenn kein Risiko in dem ersten Signal erkennbar ist, wobei zu einem zweiten Zeitpunkt die zweite Nachricht mit dem Freigabesignal und dem ersten Identifikator von dem Überwachungssystem empfangen wird, wobei die zweite Nachricht von dem Überwachungssystem überprüft wird, wobei die sicherheitskritische Funktion von dem Überwachungssystem freigegeben wird, wenn die Überprüfung der zweiten Nachricht erfolgreich verläuft Mögliche Sensoren zur Überwachung des Bereichs sind bspw. Lichtschranken, Kontaktsensoren an Türen, Ultraschallsensoren, Radarsensoren oder Kameras. Die Sensoren können eine Begrenzung des Bereichs und/oder den Bereich selbst überwachen.

Für die Versendung in der ersten Nachricht wird vorzugsweise das Signal einer Kamera oder eines anderen bildgebenden Sensors, also ein Bild oder bevorzugt ein Bilderstrom, verwendet. Dies ist besonders vorteilhaft, wenn an der Freigabeeinheit ein Mensch die Situation bewerten soll.

Durch den Identifikator ist das Überwachungssystem in der Lage die zweite Nachricht der ersten Nachricht zuzuordnen. Dies ist vorteilhaft bei der Versendung mehrerer Nachrichten mit Signalen des Überwachungssensors über ein Netzwerk, bei dem die zeitliche Reihenfolge von Nachrichten nicht garantiert ist, wie bspw. dem Internet.

Eine Überprüfung der zweiten Nachricht gilt dann als erfolgreich, wenn sie nicht aus mindestens einem Grund fehlschlägt. Mögliche Gründe für ein Fehlschlagen der Überprüfung werden im Folgenden angeführt.

Bevorzugt wird zu einem dritten Zeitpunkt ein zweites Signal des Überwachungssensors mit einem zweiten Identifikator zu einer dritten Nachricht kombiniert, wobei der dritte Zeitpunkt hinter dem ersten Zeitpunkt liegt, wobei der zweite Identifikator unterschiedlich zum ersten Identifikator ist, wobei über die Identifikatoren die zeitliche Reihenfolge der Signale festgestellt werden kann

Das zweite Signal ist das gleiche Signal wie das erste Signal, mit dem Unterschied, dass das zweite Signal zu einem späteren Zeitpunkt vom Überwachungssensor erzeugt wurde, bevorzugt ein Bild oder eine Bilderfolge, die zu dem späteren Zeitpunkt aufgenommen werden. Die dritte Nachricht kann daher von der Freigabeeinheit wie eine erste Nachricht behandelt werden.

Es versteht sich, dass weitere Nachrichten mit jeweils aktuellen Signalen des Überwachungssensors versendet werden können. Dadurch kann an der Freigabeeinheit auch eine Situation bewertet werden, die sich nach der Sperrung der Funktion geändert hat. Die weiteren Nachrichten erhalten jeweils einen eigenen Identifikator. Die Nachrichten werden bevorzugt periodisch versendet. Dies ist besonders vorteilhaft, wenn in jeder Nachricht ein oder mehrere Bilder eines Bilderstroms einer Kamera enthalten sind.

Der Identifikator ist bevorzugt ein Zeitstempel. Mit Zeitstempeln lässt sich die zeitliche Reihenfolge der Nachrichten besonders leicht feststellen.

Besonders bevorzugt ist der erste Identifikator ein kryptografisch signierter Zeitstempel ist, wobei die Überprüfung des Freigabesignals fehlschlägt, wenn eine Validierung des ersten kryptografisch signierten Zeitstempels aus der zweiten Nachricht fehlschlägt. Kryptografisch signierte Zeitstempel sind bspw. aus dem Standard RFC3161 oder dem ANSI ASC X9.95 Standard bekannt.

Informationen finden sich auch unter https://en.wikipedia.org/wiki/Trusted timestamping

Kryptografisch signierte Zeitstempel sind vorteilhaft, da Freigabesignale mit einem willkürlichen Zeitstempel zu einem Fehlschlagen der Überprüfung führen. Fehlfunktionen der Freigabeeinheit führen so nicht zu einer fehlerhaften Freigabe der sicherheitskritischen Funktion.

Bevorzugt die zweite Nachricht mit einer zweiten kryptografischen Signatur von der Freigabeeinheit versehen, wobei die Überprüfung der zweiten Nachricht fehlschlägt, wenn eine Validierung der zweiten kryptografischen Signatur fehlschlägt. Die zweite Signatur kann bspw. mit einem privaten Schlüssel der Freigabeeinheit erstellt werden, wobei der zum privaten Schlüssel gehörige öffentliche Schlüssel zur Prüfung der zweiten Signatur im Überwachungssystem abgelegt ist. Durch die kryptografische Signatur kann sichergestellt werden, dass die zweite Nachricht von der Freigabeeinheit stammt und nicht von einer unbekannten Einheit.

Bevorzugt schlägt die Überprüfung der zweiten Nachricht fehl, wenn zwischen dem ersten Zeitpunkt und dem zweiten Zeitpunkt das Überwachungssystem ein zweites Risiko detektiert. Das zweite Risiko wird ebenso wie das erste Risiko aus den Signalen des Überwachungssensors oder eines anderen Überwachungssensors detektiert. Die sicherheitskritische Funktion wird nur freigegeben, wenn die Nachricht mit dem Freigabesignal einen Identifikator aufweist, der auf einen Zeitpunkt nach dem letzten detektierten Risiko verweist. Die Überprüfung von Freigabesignalen mit anderen Identifikatoren führt zu einem Fehlschlagen der Überprüfung.

In einer bevorzugten Ausgestaltung wird die erste Nachricht zusätzlich an eine zweite Freigabeeinheit gesendet, wobei eine zweite Nachricht von der zweiten Freigabeeinheit mit einem Freigabesignal und dem ersten Identifikator von dem Überwachungssystem genauso behandelt wird wie die zweite Nachricht von der ersten Freigabeeinheit. Durch die Versendung der ersten Nachricht an eine zweite Freigabeeinheit wird die Freigabe der Funktion von zwei Freigabeeinheiten ermöglicht. Dies ist vorteilhaft, falls eine Freigabeeinheit ausfällt oder ein Bediener eine manuell zu bedienenden Freigabeeinheit verhindert ist.

Ein zweiter Aspekt der Erfindung betrifft ein System zu Freigabe einer sicherheitskritischen Funktion einer Maschine, insbesondere einer Werkzeugmaschine, umfassend die Maschine, ein Überwachungssystem und eine Freigabeeinheit, wobei das Überwachungssystem zumindest einen Überwachungssensor zur Überwachung eines sicherheitskritischen Bereichs der Maschine aufweist, wobei das Überwachungssystem und die Freigabeeinheit kommunikativ verbunden sind, wobei das Überwachungssystem eine Recheneinheit umfasst, wobei die Recheneinheit dazu vorgesehen und eingerichtet ist ein erstes Signal des Überwachungssensors auszuwerten und die sicherheitskritische Funktion der Maschine zu sperren, wenn die Recheneinheit in dem ersten Signal des Überwachungssensors ein erstes Risiko detektiert, wobei das Überwachungssystem dazu vorgesehen und eingerichtet ist das erste Signal des Überwachungssensors mit einem ersten Identifikator zu kombinieren und in einer ersten Nachricht an die Freigabeeinheit zu übertragen, wobei die Freigabeeinheit dazu vorgesehen und eingerichtet ist zu prüfen, ob das Risiko in dem ersten Signal erkennbar ist, oder ob das Risiko nicht oder nicht mehr vorhanden ist, wobei die Freigabeeinheit dazu vorgesehen und eingerichtet ist eine zweite Nachricht mit einem Freigabesignal und dem ersten Identifikator zu verschicken, wenn kein Risiko in dem ersten Signal erkennbar ist wobei das Überwachungssystem dazu vorgesehen und eingerichtet ist eine zweite Nachricht mit einem Freigabesignal und dem ersten Identifikator von der Freigabeeinheit zu empfangen, wobei das Überwachungssystem dazu vorgesehen und eingerichtet ist die zweite Nachricht zu Überprüfen und die sicherheitskritische Funktion der Maschine freizugeben, wenn die Überprüfung der zweiten Nachricht erfolgreich verläuft.

Die Recheneinheit kann einen Prozessor, einen FPGA, einen ASIC, einen Controller oder ein anderes Rechenwerk umfassen. Die Recheneinheit kann Teil der Maschine sein oder eine eigenständige Einheit.

Das System ist bevorzugt dazu vorgesehen und ausgestaltet bevorzugte Ausgestaltungen des erfindungsgemäßen Verfahrens durchzuführen.

Der Überwachungssensor ist bevorzugt eine Kamera. Signale einer Kamera lassen sich besonders einfach von einem Menschen überprüfen.

Besonders bevorzugt ist ein weiterer Überwachungssensor eine Lichtschranke, ein Kontaktsensor, ein Ultraschallsensor, ein Radarsensor oder ein Lidarsensor.

Zusätzliche Sensoren erhöhen die Sicherheit, da mehr mögliche Risiken erkannt werden können.

Bevorzugt ist der Zeitstempel ein kryptografisch signierter Zeitstempel, wobei das Überwachungssystem dazu vorgesehen und eingerichtet ist den in der zweiten Nachricht empfangenen Zeitstempel zu validieren und die Überprüfung der zweiten Nachricht fehlschlagen zu lassen, wenn die Validierung fehlschlägt.

Bevorzugt ist das Überwachungssystem dazu vorgesehen und eingerichtet einen zweiten Zeitpunkt des Empfangs der zweiten Nachrichten mit einem ersten Zeitpunkt, der durch den ersten Identifikator aus der zweiten Nachricht definiert ist, zu vergleichen und die Überprüfung der zweiten Nachricht fehlschlagen zu lassen, wenn die Differenz zwischen dem ersten Zeitpunkt und dem zweiten Zeitpunkt größer ist als ein vorbestimmter Grenzwert.

Bevorzugt ist das Überwachungssystem dazu vorgesehen und eingerichtet die Überprüfung der zweiten Nachricht fehlschlagen zu lassen, wenn das Überwachungssystem zwischen dem ersten Zeitpunkt und dem zweiten Zeitpunkt ein zweites Risiko in einem zweiten Signal des Überwachungssensors detektiert.

Bevorzugt ist die zweite Nachricht mit einer kryptografischen Signatur der Freigabeeinheit versehen und das Überwachungssystem dazu vorgesehen und eingerichtet die kryptografische Signatur der zweiten Nachricht zu validieren und die Überprüfung der zweiten Nachricht fehlschlagen zu lassen, wenn die Validierung der kryptografischen Signatur fehlschlägt

Die nachfolgende Beschreibung bevorzugter Ausführungsformen dient im Zusammenhang mit den Zeichnungen der näheren Erläuterung der Erfindung.

Es zeigen:
- Fig. 1: eine schematische Ansicht eines Überwachungssystems;
- Fig. 2: einen schematischen Ablauf einer Kommunikation zwischen Überwachungssystem und Freigabeeinheit; und
- Fig. 3: einen zeitlichen Ablauf eines erfindungsgemäßen Verfahrens.

Gleiche oder funktional äquivalente Elemente sind in sämtlichen Ausführungsbeispielen mit denselben Bezugszeichen bezeichnet. Die Ausführungsbeispiele sind mit einer Freigabeeinheit beschrieben. Werden mehrere Freigabeeinheiten genutzt, so werden die ersten Nachrichten des Überwachungssystems jeweils an alle Freigabeeinheiten versendet und die zweiten Nachrichten der Freigabeeinheiten von dem Überwachungssystem gleichbehandelt.

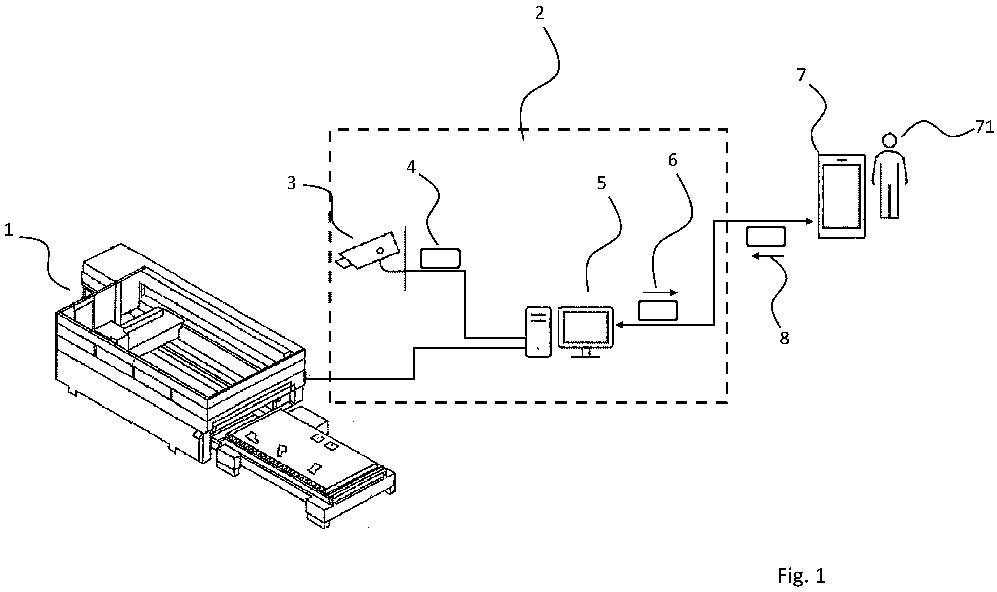

Eine schematische Ansicht eines Überwachungssystems 2 ist in Fig. 1 gezeigt. Ein Bereich um eine Maschine 1, hier eine Laserschneidmaschine, wird mit einem Überwachungssensor 3, hier einer Kamera, überwacht. Der Überwachungssensor 2 schickt ein Signal 4, hier einer Bilderfolge, an eine Recheneinheit 5. Detektiert die Recheneinheit 5 in dem Signal 4 ein Risiko, sperrt die Recheneinheit 5 eine sicherheitskritische Funktion der Maschine 1, damit kein Schaden entsteht. Bevorzugt wird die ganze Maschine 1 gestoppt oder in einen sicheren Zustand gebracht.

Die Recheneinheit 5 kombiniert das Signal 4 mit einem ersten Identifikator zu einer ersten Nachricht 6. Die erste Nachricht 6 schickt die Recheneinheit 5 an eine Freigabeeinheit 7. Die Freigabeeinheit 7 ist in diesem Fall ein Smartphone. Die Freigabeeinheit 7 prüft, ob das Risiko in dem Signal 4 erkennbar ist, oder ob das Risiko nicht oder nicht mehr vorhanden ist. In diesem Beispiel prüft ein Bediener 71 der Freigabeeinheit das Signal 4. Ist in dem Signal 4 kein Risiko erkennbar, sei es durch eine fehlerhafte Detektion durch die Recheneinheit 5 oder dadurch, dass das Risiko temporärer Natur war, erzeugt die Freigabeeinheit 7 eine zweite Nachricht 8 mit einem Freigabesignal und dem ersten Identifikator und schickt die zweite Nachricht 8 an die Recheneinheit des Überwachungssystems 2. Die Recheneinheit 5 überprüft die zweite Nachricht 8. Bei einer erfolgreichen Überprüfung gibt die Recheneinheit 5 die sicherheitskritische Funktion der Maschine 1 frei. Schlägt die Überprüfung der zweiten Nachricht 8 fehl, bleibt die Funktion gesperrt.

Die Recheneinheit 5 erzeugt, bevorzugt periodisch, weitere Nachrichten 6 mit aktuellen Signalen 4 des Überwachungssensors 3 und jeweils individuellem Identifikator. Dadurch kann die Freigabeeinheit 7 prüfen, ob das Risiko zu einem späteren Zeitpunkt verschwunden ist und daraufhin ein Freigabesignal mit dem Identifikator derjenigen Nachricht 6 schicken, in dem das Risiko nicht mehr detektierbar ist.

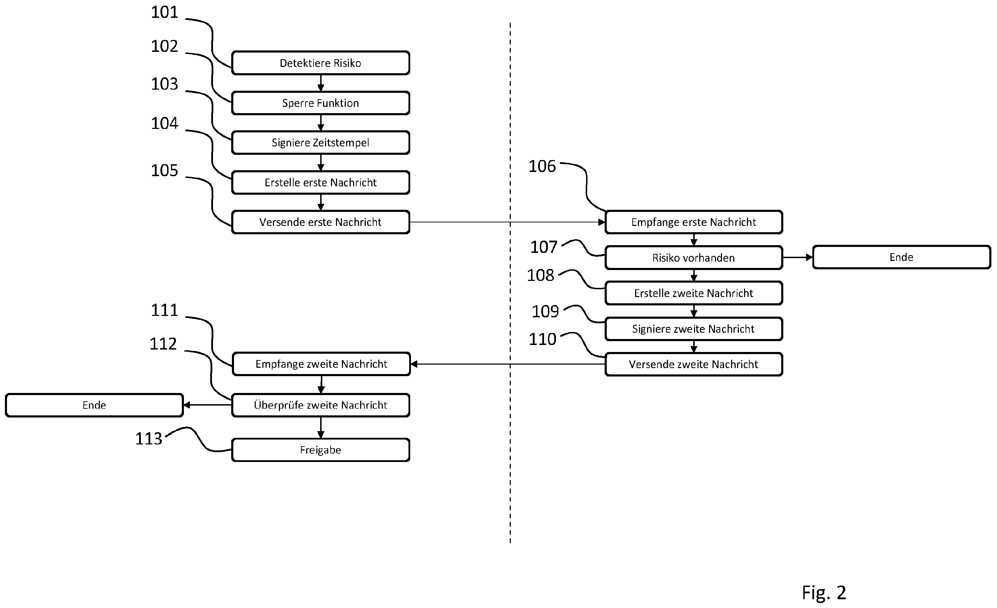

In Fig. 2 ist ein schematischer Ablauf einer Kommunikation zwischen Überwachungssystem und Freigabeeinheit gezeigt. In einem ersten Schritt 101 detektiert das Überwachungssystem 2 ein erstes Risiko. In einem zweiten Schritt 102 sperrt das Überwachungssystem 2 eine sicherheitskritische Funktion der Maschine 1. In einem dritten Schritt 103 erzeugt das Überwachungssystem 2 einen signierten Zeitstempel als Identifikator. In einem vierten Schritt 104 erstellt das Überwachungssystem eine erste Nachricht 6, wobei die erste Nachricht 6 sowohl das Signal 4 als auch den Identifikator enthält. In einem fünften Schritt 105 versendet das Überwachungssystem 2 die erste Nachricht 6 zu einem ersten Zeitpunkt an eine Freigabeeinheit 7. Da die Schritte typischerweise durch eine Recheneinheit in schneller Abfolge durchgeführt werden, wird der durch den Zeitstempel definierte Zeitpunkt mit dem ersten Zeitpunkt gleichgesetzt.

Die Freigabeeinheit 7 empfängt in einem sechsten Schritt 106 die erste Nachricht 6. Die Freigabeeinheit 7 prüft in einem siebten Schritt 107, ob ein Risiko in dem Signal 4 detektierbar ist. Wenn das Risiko in dem Signal 4 von der Freigabeeinheit 7 im siebten Schritt detektiert wird, endet das Verfahren. Detektiert die Freigabeeinheit 7 kein Risiko in dem Signal 4, so erstellt die Freigabeeinheit 7 in einem achten Schritt 108 eine zweite Nachricht 8. Die zweite Nachricht 8 enthält dabei ein Freigabesignal und den Identifikator derjenigen ersten Nachricht 6 in der kein Risiko detektiert wurde. Die zweite Nachricht 8 wird von der Freigabeeinheit 7 in einem neunten Schritt 109 signiert. In einem zehnten Schritt 110 versendet die Freigabeeinheit 7 die signierte zweite Nachricht 8 an das Überwachungssystem 2.

Das Überwachungssystem 2 empfängt die zweite Nachricht 8 zu einem zweiten Zeitpunkt in einem elften Schritt 111. In einem zwölften Schritt 112 überprüft das Überwachungssystem 2 die zweite Nachricht 8. Bei der Überprüfung prüft das Überwachungssystem 2 die Signatur der zweiten Nachricht 8. Ist die Signatur nicht von der Freigabeeinheit 7, so schlägt die Überprüfung fehl und das Verfahren endet. Wenn der erste Identifikator ein signierter Zeitstempel ist, prüft das Überwachungssystem, ob die Signatur der Zeitstempels gültig ist. Wenn die Signatur des Zeitstempels ungültig ist, schlägt die Überprüfung fehl und das Verfahren endet. Das Überwachungssystem 2 prüft ob zwischen einem ersten Zeitpunkt, der durch den ersten Identifikator bestimmt ist, und dem zweiten Zeitpunkt ein zweites Risiko im Signal 4 des Überwachungssensors 2 detektiert wurde. Da die Schritte typischerweise durch eine Recheneinheit in schneller Abfolge durchgeführt werden, wird der zweite Zeitpunkt mit dem Zeitpunkt der Überprüfung gleichgesetzt. Wenn ein zweites Risiko detektiert wurde, schlägt die Überprüfung fehl und das Verfahren endet. Schlägt die Überprüfung nicht fehl, so ist die Überprüfung erfolgreich und das Überwachungssystem gibt in einem dreizehnten Schritt 113 die sicherheitskritische Funktion der Maschine 1 frei.

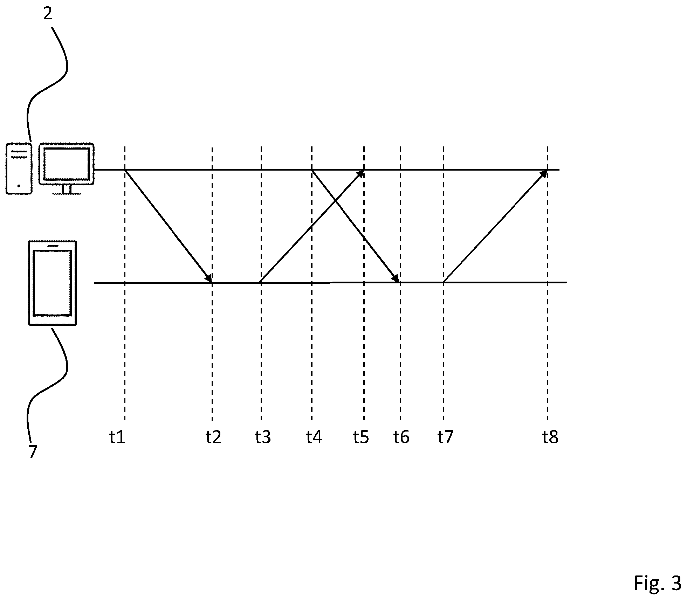

In Fig. 3 ist einen zeitlichen Ablauf eines erfindungsgemäßen Verfahrens dargestellt. Zu einem Zeitpunkt t1 detektiert das Überwachungssystem 2 in einem Signal 4 des Überwachungssensors 3 ein erstes Risiko, sperrt die sicherheitskritische Funktion der Maschine und versendet eine erste Nachricht 6 mit dem Signal des Zeitpunkts t1 und einem ersten Identifikator an eine Freigabeeinheit 7. Zu einem Zeitpunkt t2 empfängt die Freigabeeinheit 7 die erste Nachricht 6. Nach der Prüfung des Signals und der Feststellung, dass kein Risiko besteht, schickt die Freigabeeinheit 7 zu einem Zeitpunkt t3 eine zweite Nachricht 8 mit einem Freigabesignal an das Überwachungssystem 2.

Zu einem Zeitpunkt t4, der hinter dem Zeitpunkt t1 liegt, detektiert das Überwachungssystem ein zweites Risiko in einem Signal des Überwachungssensors und versendet eine dritte Nachricht mit dem Signal 4 des Zeitpunkts t4 und einem zweiten Identifikator an die Freigabeeinheit 7. Die sicherheitskritische Funktion wurde bereits zum Zeitpunkt t1 gesperrt. Der Zeitpunkt t4 liegt hier hinter dem Zeitpunkt t3, könnte aber auch vor Zeitpunkt t3 oder vor Zeitpunkt t2 liegen.

Zu einem Zeitpunkt t5, der hinter dem Zeitpunkt t4 liegt, empfängt das Überwachungssystem 2 die zweite Nachricht 8. Die Überprüfung der zweiten Nachricht 8 schlägt fehl, da zu dem Zeitpunkt t4 zwischen den Zeitpunkten t1 und t5 ein zweites Risiko detektiert wurde. Die sicherheitskritische Funktion bleibt daher gesperrt.

Zu einem Zeitpunkt t6 empfängt die Freigabeeinheit 7 die dritte Nachricht 6. Nach der Prüfung des Signals und der Feststellung, dass kein Risiko besteht, schickt die Freigabeeinheit 7 zu einem Zeitpunkt t7 eine vierte Nachricht 8 mit einem Freigabesignal an das Überwachungssystem 2. Zu einem Zeitpunkt t8 empfängt das Überwachungssystem 2 die vierte Nachricht 8. Nach der erfolgreichen Überprüfung der vierten Nachricht gibt das Überwachungssystem die sicherheitskritische Funktion der Maschine frei.

Es ist ersichtlich, dass die dritte Nachricht äquivalent zur ersten Nachricht ist und die vierte Nachricht äquivalent zur zweiten Nachricht ist. Entsprechend werden die dritte Nachricht und die vierte Nachricht von dem Überwachungssystem und der Freigabeeinheit genauso behandelt wie die erste Nachricht und die zweite Nachricht. Ebenso ist der Zeitpunkt t4 äquivalent zum Zeitpunkt t1 und der Zeitpunkt t8 äquivalent zum Zeitpunkt t5.

### Bezugszeichenliste

- 1: Maschine
- 2: Überwachungssystem
- 3: Überwachungssensor
- 4: Signal
- 5: Recheneinheit
- 6: erste Nachricht
- 7: Freigabeeinheit
- 71: Bediener
- 8: zweite Nachricht
- t1 - t8: Zeitpunkte

## Patentansprüche

1. Verfahren zur Freigabe einer sicherheitskritischen Funktion einer Maschine (1),
wobei ein Überwachungssystem (2) einen sicherheitskritischen Bereich der Maschine (1) überwacht,
wobei das Überwachungssystem (2) zumindest einen Überwachungssensor (3) umfasst,
wobei die sicherheitskritische Funktion gesperrt wird, wenn das Überwachungssystem (2) in einem Signal (4) des Überwachungssensors (3) ein erstes Risiko detektiert,
wobei das erste Signal (4) des Überwachungssensors (3) zu einem ersten Zeitpunkt (t1) mit einem ersten Identifikator zu einer ersten Nachricht (6) kombiniert wird,
wobei die erste Nachricht (6) von dem Überwachungssystem (2) an eine Freigabeeinheit (7) versendet wird,
wobei die Freigabeeinheit (7) prüft, ob das Risiko in dem ersten Signal (4) erkennbar ist, oder ob das Risiko nicht oder nicht mehr vorhanden ist,
wobei die Freigabeeinheit (7) eine zweite Nachricht (8) mit einem Freigabesignal und dem ersten Identifikator verschickt, wenn kein Risiko in dem ersten Signal (4) erkennbar ist,
wobei zu einem zweiten Zeitpunkt (t5) die zweite Nachricht (8) mit dem Freigabesignal und dem ersten Identifikator von dem Überwachungssystem (2) empfangen wird,
wobei die zweite Nachricht (8) von dem Überwachungssystem (2) überprüft wird,
wobei die sicherheitskritische Funktion von dem Überwachungssystem (2) freigegeben wird, wenn die Überprüfung der zweiten Nachricht (8) erfolgreich verläuft.

2. Verfahren nach Anspruch 1, **dadurch gekennzeichnet, dass** zu einem dritten Zeitpunkt (t4) ein zweites Signal des Überwachungssensors (3) mit einem zweiten Identifikator zu einer dritten Nachricht kombiniert wird, wobei der dritte Zeitpunkt (t4) hinter dem ersten Zeitpunkt (1) liegt, wobei der zweite Identifikator unterschiedlich zum ersten Identifikator ist, wobei über die Identifikatoren die zeitliche Reihenfolge der Signale festgestellt werden kann.

3. Verfahren nach einem der vorhergehenden Ansprüche, **dadurch gekennzeichnet**, der erste Identifikator ein Zeitstempel ist.

4. Verfahren nach einem der vorhergehenden Ansprüche, **dadurch gekennzeichnet, dass** der erste Identifikator ein kryptografisch signierter Zeitstempel ist, wobei die Überprüfung der zweiten Nachricht (8) fehlschlägt, wenn eine Validierung des ersten kryptografisch signierten Zeitstempels aus der zweiten Nachricht (8) fehlschlägt.

5. Verfahren nach einem der vorhergehenden Ansprüche, **dadurch gekennzeichnet, dass** die zweite Nachricht (8) mit einer zweiten kryptografischen Signatur von der Freigabeeinheit (7) versehen ist, wobei die Überprüfung der zweiten Nachricht (8) fehlschlägt, wenn eine Validierung der zweiten kryptografischen Signatur fehlschlägt.

6. Verfahren nach einem der vorhergehenden Ansprüche, **dadurch gekennzeichnet, dass** die Überprüfung der zweiten Nachricht (8) fehlschlägt, wenn zwischen dem ersten Zeitpunkt (t1) und dem zweiten Zeitpunkt (t5) von dem Überwachungssystem (2) ein zweites Risiko detektiert wird (t4).

7. Verfahren nach einem der vorhergehenden Ansprüche, **dadurch gekennzeichnet, dass** die erste Nachricht (6) zusätzlich an eine zweite Freigabeeinheit (7) gesendet wird, wobei eine zweite Nachricht (8) von der zweiten Freigabeeinheit (7) mit einem Freigabesignal und dem ersten Identifikator von dem Überwachungssystem (2) genauso behandelt wird wie die zweite Nachricht von der ersten Freigabeeinheit (7).

8. System zur Freigabe einer sicherheitskritischen Funktion einer Maschine (1), insbesondere einer Werkzeugmaschine, umfassend
die Maschine (1), ein Überwachungssystem (2) und eine Freigabeeinheit (7), wobei das Überwachungssystem (2) zumindest einen Überwachungssensor (3) zur Überwachung eines sicherheitskritischen Bereichs der Maschine (1) aufweist,
wobei das Überwachungssystem (2) und die Freigabeeinheit (7) kommunikativ verbunden sind,
wobei das Überwachungssystem (2) eine Recheneinheit (5) umfasst,
wobei die Recheneinheit (5) dazu vorgesehen und eingerichtet ist ein erstes Signal (4) des Überwachungssensors (3) auszuwerten und die sicherheitskritische Funktion der Maschine (1) zu sperren, wenn die Recheneinheit (5) in dem ersten Signal (4) des Überwachungssensors (3) ein erstes Risiko detektiert,
wobei das Überwachungssystem (2) dazu vorgesehen und eingerichtet ist das erste Signal (4) des Überwachungssensors (3) mit einem ersten Identifikator zu kombinieren und in einer ersten Nachricht (6) an die Freigabeeinheit (7) zu übertragen,
wobei die Freigabeeinheit (7) dazu vorgesehen und eingerichtet ist zu prüfen, ob das Risiko in dem ersten Signal (4) erkennbar ist, oder ob das Risiko nicht oder nicht mehr vorhanden ist,
wobei die Freigabeeinheit (7) dazu vorgesehen und eingerichtet ist eine zweite Nachricht (8) mit einem Freigabesignal und dem ersten Identifikator zu verschicken, wenn kein Risiko in dem ersten Signal (4) erkennbar ist, wobei das Überwachungssystem (2) dazu vorgesehen und eingerichtet ist eine zweite Nachricht (8) mit einem Freigabesignal und dem ersten Identifikator von der Freigabeeinheit (7) zu empfangen,
wobei das Überwachungssystem (2) dazu vorgesehen und eingerichtet ist die zweite Nachricht (8) zu Überprüfen und die sicherheitskritische Funktion der Maschine (1) freizugeben, wenn die Überprüfung der zweiten Nachricht (8) erfolgreich verläuft.

9. System nach Anspruch 8, **dadurch gekennzeichnet, dass** der Überwachungssensor (3) eine Kamera ist.

10. System nach einem der Ansprüche 8 oder 9, **dadurch gekennzeichnet, dass** ein weiterer Überwachungssensor (3) eine Lichtschranke, ein Kontaktsensor, ein Ultraschallsensor, ein Radarsensor oder ein Lidarsensor ist.

11. System nach einem der Ansprüche 8 bis 10, **dadurch gekennzeichnet, dass** der erste Identifikator ein Zeitstempel ist.

12. System nach Anspruch11, **dadurch gekennzeichnet, dass** der Zeitstempel ein kryptografisch signierter Zeitstempel ist, wobei das Überwachungssystem (2) dazu vorgesehen und eingerichtet ist den in der zweiten Nachricht (8) empfangenen Zeitstempel zu validieren und die Überprüfung der zweiten Nachricht (8) fehlschlagen zu lassen, wenn die Validierung fehlschlägt.

13. System nach einem der Ansprüche 8 bis 12, **dadurch gekennzeichnet, dass** das Überwachungssystem (2) dazu vorgesehen und eingerichtet ist einen zweiten Zeitpunkt (t5) des Empfangs der zweiten Nachrichten (8) mit einem ersten Zeitpunkt (t1), der durch den ersten Identifikator aus der zweiten Nachricht (8) definiert ist, zu vergleichen und die Überprüfung der zweiten Nachricht (8) fehlschlagen zu lassen, wenn die Differenz zwischen dem ersten Zeitpunkt (t1) und dem zweiten Zeitpunkt (t5) größer ist als ein vorbestimmter Grenzwert.

14. System nach einem der Ansprüche 8 bis 13, **dadurch gekennzeichnet, dass** das Überwachungssystem (2) dazu vorgesehen und eingerichtet ist die Überprüfung der zweiten Nachricht (8) fehlschlagen zu lassen, wenn das Überwachungssystem (2) zwischen dem ersten Zeitpunkt (t1) und dem zweiten Zeitpunkt (t5) ein zweites Risiko in einem zweiten Signal des Überwachungssensors detektiert (t4).

15. System nach einem der Ansprüche 8 bis 13, **dadurch gekennzeichnet, dass** die zweite Nachricht (8) mit einer kryptografischen Signatur der Freigabeeinheit versehen ist und das Überwachungssystem (2) dazu vorgesehen und eingerichtet die kryptografische Signatur der zweiten Nachricht (8) zu validieren und die Überprüfung der zweiten Nachricht (8) fehlschlagen zu lassen, wenn die Validierung der kryptografischen Signatur fehlschlägt.

## Claims

1. A method for enabling a safety-critical function of a machine (1),
wherein a monitoring system (2) monitors a safety-critical region of the machine (1),
wherein the monitoring system (2) comprises at least one monitoring sensor (3),
wherein the safety-critical function is blocked if the monitoring system (2) detects a first risk in a signal (4) of the monitoring sensor (3),
wherein the first signal (4) of the monitoring sensor (3) is combined with a first identifier at a first point in time (t1) to form a first message (6),
wherein the first message (6) is sent from the monitoring system (2) to an enabling unit (7),
wherein the enabling unit (7) verifies whether the risk in the first signal (4) is recognizable or whether the risk is not, or is no longer, present,
wherein the enabling unit (7) sends a second message (8) with an enabling signal and the first identifier if there is no risk recognizable in the first signal (4),
wherein at a second point in time (t5), the second message (8) with the enabling signal and the first identifier is received from the monitoring system (2),
wherein the second message (8) is verified by the monitoring system (2),
wherein the safety-critical function is enabled by the monitoring system (2) if the verification of the second message (8) goes successfully.

2. The method according to claim 1, **characterized in that** at a third point in time (t4) a second signal of the monitoring sensor (3) is combined with a second identifier to form a third message, wherein the third point in time (t4) is after the first point in time (1), wherein the second identifier is different from the first identifier, wherein the chronological order of the signals can be established via the identifiers.

3. The method according to one of the preceding claims, **characterized in that** the first identifier is a time stamp.

4. The method according to one of the preceding claims, **characterized in that** the first identifier is a cryptographically signed time stamp, wherein the verification of the second message (8) fails if a validation of the first cryptographically signed time stamp from the second message (8) fails.

5. The method according to one of the preceding claims, **characterized in that** the second message (8) is provided with a second cryptographic signature from the enabling unit (7), wherein the verification of the second message (8) fails if a validation of the second cryptographic signature fails.

6. The method according to one of the preceding claims, **characterized in that** the verification of the second message (8) fails if a second risk is detected (t4) by the monitoring system (2) between the first point in time (t1) and the second point in time (t5).

7. The method according to one of the preceding claims, **characterized in that** the first message (6) is also sent to a second enabling unit (7), wherein a second message (8) from the second enabling unit (7) with an enabling signal and the first identifier is treated by the monitoring system (2) exactly the same as the second message from the first enabling unit (7).

8. A system for enabling a safety-critical function of a machine (1), in particular a machine tool, comprising
the machine (1), a monitoring system (2) and an enabling unit (7), wherein the monitoring system (2) has at least one monitoring sensor (3) for monitoring a safety-critical region of the machine (1),
wherein the monitoring system (2) and the enabling unit (7) are communicatively connected,
wherein the monitoring system (2) comprises a computing unit (5),
wherein the computing unit (5) is provided and configured to evaluate a first signal (4) of the monitoring sensor (3) and to block the safety-critical function of the machine (1) if the computing unit (5) detects a first risk in the first signal (4) of the monitoring sensor (3),
wherein the monitoring system (2) is provided and configured to combine the first signal (4) of the monitoring sensor (3) with a first identifier and to transmit the same to the enabling unit (7) in a first message (6),
wherein the enabling unit (7) is provided and configured to verify whether the risk in the first signal (4) is recognizable or whether the risk is not, or is no longer, present,
wherein the enabling unit (7) is provided and configured to send a second message (8) with an enabling signal and the first identifier if there is no recognizable risk in the first signal (4), wherein the monitoring system (2) is provided and configured to receive a second message (8) with an enabling signal and the first identifier from the enabling unit (7),
wherein the monitoring system (2) is provided and configured to verify the second message (8) and to enable the safety-critical function of the machine (1) if the verification of the second message (8) is successful.

9. The system according to claim 8, **characterized in that** the monitoring sensor (3) is a camera.

10. The system according to one of claims 8 or 9, **characterized in that** a further monitoring sensor (3) is a light barrier, a contact sensor, an ultrasonic sensor, a radar sensor, or a lidar sensor.

11. The system according to one of claims 8 to 10, **characterized in that** the first identifier is a time stamp.

12. The system according to claim 11, **characterized in that** the time stamp is a cryptographically signed time stamp, wherein the monitoring system (2) is provided and configured to validate the time stamp received in the second message (8) and to allow the verification of the second message (8) to fail if the validation fails.

13. The system according to one of claims 8 to 12, **characterized in that** the monitoring system (2) is provided and configured to compare a second point in time (t5) of the receiving of the second messages (8) with a first point in time (t1) which is defined by the first identifier from the second message (8), and to allow the verification of the second message (8) to fail if the difference between the first point in time (t1) and the second point in time (t5) is greater than a predetermined limit value.

14. The system according to one of claims 8 to 13, **characterized in that** the monitoring system (2) is provided and configured to allow the verification of the second message (8) to fail if the monitoring system (2) detects (t4) a second risk in a second signal of the monitoring sensor between the first point in time (t1) and the second point in time (t5).

15. The system according to one of claims 8 to 13, **characterized in that** the second message (8) is provided with a cryptographic signature from the enabling unit, and the monitoring system (2) is provided and configured to validate the cryptographic signature of the second message (8), and to allow the verification of the second message (8) to fail if the validation of the cryptographic signature fails.

## Revendications

1. Procédé d'autorisation d'une fonction critique pour la sécurité d'une machine (1), dans lequel un système de surveillance (2) surveille une zone critique pour la sécurité de la machine (1),
dans lequel le système de surveillance (2) comprend au moins un capteur de surveillance (3),
dans lequel la fonction critique pour la sécurité est bloquée lorsque le système de surveillance (2) détecte un premier risque dans un signal (4) du capteur de surveillance (3),
dans lequel le premier signal (4) du capteur de surveillance (3) est combiné, à un premier instant (t1), avec un premier identifiant en un premier message (6),
dans lequel le premier message (6) est envoyé par le système de surveillance (2) à une unité d'autorisation (7),
dans lequel l'unité d'autorisation (7) vérifie si le risque est détectable dans le premier signal (4), ou si le risque n'est pas ou n'est plus présent,
dans lequel l'unité d'autorisation (7) envoie un deuxième message (8) avec un signal d'autorisation et le premier identifiant si aucun risque n'est détectable dans le premier signal (4),
dans lequel, à un deuxième instant (t5), le deuxième message (8) avec le signal d'autorisation et le premier identifiant est reçu par le système de surveillance (2),
dans lequel le deuxième message (8) est vérifié par le système de surveillance (2),
dans lequel la fonction critique pour la sécurité est autorisée par le système de surveillance (2) si la vérification du deuxième message (8) s'avère réussie.

2. Procédé selon la revendication 1, **caractérisé en ce qu'**à un troisième instant (t4) un deuxième signal du capteur de surveillance (3) est combiné avec un deuxième identifiant en un troisième message, dans lequel le troisième instant (t4) est postérieur au premier instant (1), dans lequel le deuxième identifiant est différent du premier identifiant, dans lequel la séquence temporelle des signaux peut être déterminée au moyen des identifiants.

3. Procédé selon l'une des revendications précédentes, **caractérisé en ce que** le premier identifiant est un horodatage.

4. Procédé selon l'une des revendications précédentes, **caractérisé en ce que** le premier identifiant est un horodatage signé cryptographiquement, dans lequel la vérification du deuxième message (8) échoue si une validation du premier horodatage signé cryptographiquement à partir du deuxième message (8) échoue.

5. Procédé selon l'une des revendications précédentes, **caractérisé en ce que** le deuxième message (8) est muni d'une deuxième signature cryptographique par l'unité d'autorisation (7), dans lequel la vérification du deuxième message (8) échoue si une validation de la deuxième signature cryptographique échoue.

6. Procédé selon l'une des revendications précédentes, **caractérisé en ce que** la vérification du deuxième message (8) échoue si, entre le premier instant (t1) et le deuxième instant (t5), un deuxième risque est détecté (t4) par le système de surveillance (2).

7. Procédé selon l'une des revendications précédentes, **caractérisé en ce que** le premier message (6) est en outre émis à une deuxième unité d'autorisation (7), dans lequel un deuxième message (8) de la deuxième unité d'autorisation (7) avec un signal d'autorisation et le premier identifiant est traité par le système de surveillance (2) de la même manière que le deuxième message de la première unité d'autorisation (7).

8. Système d'autorisation d'une fonction critique pour la sécurité d'une machine (1), en particulier d'une machine-outil, comprenant
la machine (1), un système de surveillance (2) et une unité d'autorisation (7),
dans lequel le système de surveillance (2) présente au moins un capteur de surveillance (3) pour surveiller une zone critique pour la sécurité de la machine (1), dans lequel le système de surveillance (2) et l'unité d'autorisation (7) sont reliés de manière communicante,
dans lequel le système de surveillance (2) comprend une unité de calcul (5),
dans lequel l'unité de calcul (5) est conçue et agencée pour évaluer un premier signal (4) du capteur de surveillance (3) et pour bloquer la fonction critique pour la sécurité de la machine (1) lorsque l'unité de calcul (5) détecte un premier risque dans le premier signal (4) du capteur de surveillance (3),
dans lequel le système de surveillance (2) est conçu et agencé pour combiner le premier signal (4) du capteur de surveillance (3) avec un premier identifiant et le transmettre dans un premier message (6) à l'unité d'autorisation (7),
dans lequel l'unité d'autorisation (7) est conçue et agencée pour vérifier si le risque est détectable dans le premier signal (4), ou si le risque n'est pas ou n'est plus présent,
dans lequel l'unité d'autorisation (7) est conçue et agencée pour envoyer un deuxième message (8) avec un signal d'autorisation et le premier identifiant si aucun risque n'est détectable dans le premier signal (4), dans lequel le système de surveillance (2) est conçu et agencé pour recevoir un deuxième message (8) avec un signal d'autorisation et le premier identifiant de l'unité d'autorisation (7),
dans lequel le système de surveillance (2) est conçu et agencé pour vérifier le deuxième message (8) et pour autoriser la fonction critique pour la sécurité de la machine (1) si la vérification du deuxième message (8) s'avère réussie.

9. Système selon la revendication 8, **caractérisé en ce que** le capteur de surveillance (3) est une caméra.

10. Système selon l'une des revendications 8 ou 9, **caractérisé en ce qu'**un autre capteur de surveillance (3) est une barrière photoélectrique, un capteur de contact, un capteur à ultrasons, un capteur radar ou un capteur lidar.

11. Système selon l'une des revendications 8 à 10, **caractérisé en ce que** le premier identifiant est un horodatage.

12. Système selon la revendication 11, **caractérisé en ce que** l'horodatage est un horodatage signé cryptographiquement, dans lequel le système de surveillance (2) est conçu et agencé pour valider l'horodatage reçu dans le deuxième message (8) et pour faire échouer la vérification du deuxième message (8) si la validation échoue.

13. Système selon l'une des revendications 8 à 12, **caractérisé en ce que** le système de surveillance (2) est conçu et agencé pour comparer un deuxième instant (t5) de réception des deuxièmes messages (8) avec un premier instant (t1), défini par le premier identifiant à partir du deuxième message (8), et pour faire échouer la vérification du deuxième message (8) si la différence entre le premier instant (t1) et le deuxième instant (t5) est supérieure à une valeur limite prédéterminée.

14. Système selon l'une des revendications 8 à 13, **caractérisé en ce que** le système de surveillance (2) est conçu et agencé pour faire échouer la vérification du deuxième message (8) si le système de surveillance (2) détecte (t4), entre le premier instant (t1) et le deuxième instant (t5), un deuxième risque dans un deuxième signal du capteur de surveillance.

15. Système selon l'une des revendications 8 à 13, **caractérisé en ce que** le deuxième message (8) est muni d'une signature cryptographique de l'unité d'autorisation et le système de surveillance (2) est conçu et agencé pour valider la signature cryptographique du deuxième message (8) et pour faire échouer la vérification du deuxième message (8) si la validation de la signature cryptographique échoue.
